# FASCICULE DE BREVET EUROPEEN

(11) **EP 3 589 396 B1**
(45) Date de publication et mention de la délivrance du brevet: **23.12.2020**
(21) Numéro de dépôt: 18703714.8
(22) Date de dépôt: 26.01.2018
(51) Int. Cl.: B01J 8/02, B01J 8/12

(54) **REACTEUR COMPARTIMENTE A FAIBLE CAPACITE**
UNTERTEILTER REAKTOR MIT NIEDRIGER KAPAZITÄT
LOW-CAPACITY COMPARTMENTALIZED REACTOR

(30) Priorité: 01.03.2017 FR 1751657
(43) Date de publication de la demande: 08.01.2020
(73) Titulaire: IFP Energies nouvelles, 92852 Rueil-Malmaison (FR)
(72) Inventeur: NOEL, Ludovic, 78570 Andresy (FR); PLAIS, Cecile, 69420 Les Haies (FR); LAMBERT, Fabian, 78400 Chatou (FR); SANCHEZ, Eric, 69230 Saint Genis Laval (FR)
(74) Mandataire: IFP Energies nouvelles
(86) Numéro de dépôt international: PCT/EP2018/051966
(87) Numéro de publication internationale: WO 2018/158014

(56) Documents cités:
- FR-A1- 2 924 624
- FR-A1- 3 033 266
- US-B1- 6 221 320

## Description

### Domaine technique

La présente invention concerne le domaine des réacteurs avec écoulement radial de la charge hydrocarbonée à traiter. Elle s'applique plus particulièrement au reformage catalytique des essences. L'invention permet de mettre en œuvre de très faibles quantités de catalyseur et donc de contrôler des temps de séjour de faible valeur.

### Etat de la technique

Les réacteurs à lit catalytique avec une circulation radiale de la charge hydrocarbonée à traiter sont connus dans le domaine du raffinage. En particulier de tels réacteurs sont employés pour réaliser des réactions de reformage catalytique qui vise la conversion des composés paraffiniques en C7-C10 et naphtèniques en C7-C10, en composés aromatiques avec la production associée d'hydrogène. La conversion catalytique est généralement opérée à haute température, de l'ordre de 500°C, à pression moyenne entre 0,1 et 4,0 MPa et en présence d'un catalyseur spécifique de reformage de manière à produire un reformat à haut indice d'octane riche en composés aromatiques qui peut servir de base carburant.

Les contraintes liées à la technologie en lit radial mobile sont multiples. En particulier, les vitesses de la charge hydrocarbonée à traiter lors la traversée du lit catalytique sont limitées pour éviter la cavitation en entrée du lit (lorsque ce dernier est un lit mobile), pour éviter le blocage du catalyseur à sa sortie contre la grille interne, et pour réduire les pertes de charge (fonction de la vitesse et de l'épaisseur du lit). En effet, un débit de charge trop élevé va conduire au phénomène de blocage de catalyseur contre le collecteur central (ou « *pinning »* selon la terminologie anglo-saxonne). La force exercée par la charge circulant radialement depuis la périphérie extérieure du lit de catalyseur vers le centre du réacteur plaque les grains de catalyseur contre la paroi du collecteur central, ce qui augmente la contrainte de frottement qui s'oppose alors au glissement des grains le long de la paroi. Si le courant de la charge est suffisamment élevé alors la force de friction qui en résulte est suffisante pour supporter le poids du lit catalytique de sorte que l'écoulement gravitaire des grains de catalyseur cesse, au moins dans certaines régions adjacentes à la paroi du collecteur central. Dans ces régions, les grains de catalyseur sont alors « bloqués » (« pinned » selon la terminologie anglo-saxonne) par le débit de la charge et sont maintenus immobiles contre la paroi du collecteur. Le phénomène d'immobilisation des grains de catalyseur est à éviter fortement dans les réacteurs de reformage catalytique de charges hydrocarbonées dans la mesure où il favorise les réactions de désactivation du catalyseur, par exemple par cokage, empêchant ainsi la poursuite de l'exploitation du réacteur. En effet, lorsque le gâteau de catalyseur devient trop épais le long de la conduite, il est alors nécessaire de réduire le débit de charge à traiter ou voire arrêter complètement l'unité en vue du décolmatage de ladite conduite.

Le document US 6,221,320 divulgue un réacteur catalytique à écoulement de la charge et à écoulement gravitaire du catalyseur comprenant une zone réactionnelle comportant une pluralité des modules catalytiques juxtaposés les uns aux autres et régulièrement répartis à l'intérieur de la zone réactionnelle sous la forme d'un cercle. Les contraintes liées à la technologie en lit radial, telles que décrits ci-avant, i.e. éviter la cavitation en entrée du lit, éviter le blocage du catalyseur à sa sortie contre la grille interne, réduire les pertes de charge, et les contraintes de construction d'un tel réacteur (il est nécessaire de laisser un espace suffisant entre la grille interne et la grille externe) imposent un volume minimal de catalyseur. Par conséquent, ce type de réacteur n'est pas optimal pour des P.P.H. élevées, car cela conduirait au phénomène de blocage de catalyseur contre le collecteur central, étant donné que toute la section de la zone réactionnelle comprend un lit de catalyseur. La P.P.H. maximale dans ce type de réacteur est de l'ordre de 20 h⁻¹.

La présente invention a pour but de proposer un nouveau type de réacteur catalytique dont la conception permet de travailler à des P.P.H. élevées. La Demanderesse a mis au point un réacteur catalytique dont la zone réactionnelle comporte au moins un module catalytique comprenant un lit catalytique de faible épaisseur permettant de maîtriser les pertes de charges et donc permettant d'augmenter la P.P.H. (i.e. le rapport entre le débit de la charge à traiter sur la masse du catalyseur) au-delà de 40 h⁻¹, voire même au-delà de 50 h⁻¹, ce qui est bien plus élevé que les gammes de P.P.H. possibles dans les réacteurs à lit radial conventionnel (entre 20 et 35 h⁻¹).

### Objets de l'invention

Un premier objet de l'invention concerne un réacteur catalytique à écoulement radial d'une charge hydrocarbonée, lequel réacteur comprenant :
- au moins un moyen d'introduction de ladite charge à traiter ;
- au moins un moyen d'évacuation de l'effluent issu de la réaction catalytique ;
- une zone réactionnelle enfermée dans une enveloppe externe sensiblement cylindrique se présentant sous la forme d'au moins un module catalytique s'étendant selon l'axe vertical (AX), ledit module catalytique comprenant :
   ∘ au moins un lit de catalyseur ;
   ∘ au moins une paroi externe et une paroi interne, perméables respectivement à la charge à traiter et à l'effluent issu de la réaction catalytique ;
   ∘ au moins une première paroi latérale et une deuxième paroi latérale étanches à la charge à traiter ;
- au moins un moyen de support dudit module catalytique ;
- au moins un moyen de collecte de l'effluent issu de la réaction catalytique s'étendant le long de l'axe (AX) en communication avec ladite paroi externe ou ladite paroi interne dudit module catalytique ;
- une zone annulaire située au même niveau que ledit module catalytique, en dehors de la zone réactionnelle,
ledit réacteur catalytique étant caractérisé en ce que :
- lorsque ledit réacteur catalytique comprend un seul module catalytique, ledit réacteur comprend un espace vide situé en dehors de la zone réactionnelle, entre la première paroi latérale et la deuxième paroi latérale dudit module catalytique, et débouchant sur ladite zone annulaire,
- lorsque ledit réacteur catalytique comprend une pluralité de modules catalytiques, ledit réacteur comprend au moins un espace vide situé en dehors de la zone réactionnelle, entre la première paroi latérale d'un premier module catalytique et la deuxième paroi latérale d'un deuxième module catalytique adjacent au premier module catalytique, et débouchant sur ladite zone annulaire,
ledit espace vide comprenant au moins un filet plein s'étendant selon l'axe vertical (AX) et positionné de façon adjacente au moyen de collecte.

Dans un mode de réalisation selon l'invention, ledit module catalytique est sensiblement structuré et configuré comme un secteur de cylindre.

Dans un autre mode de réalisation selon l'invention, ledit module catalytique est de section rectangulaire.

Avantageusement, lesdites parois externes et internes dudit module catalytique sont constituées de grilles de type Johnson.

Dans un mode de réalisation selon l'invention, ledit réacteur comprend une pluralité de modules catalytiques structurellement indépendants les uns des autres.

Dans un autre mode de réalisation selon l'invention, ledit réacteur comprend un seul module catalytique.

Dans ce mode de réalisation, la distance minimale « dₘᵢₙ », mesurée en dehors de la zone réactionnelle, définie entre l'arrête interne de la première paroi latérale du module catalytique et l'arrête interne de la deuxième paroi latérale du module catalytique, formant l'espace vide est d'au moins 30 cm.

Dans un mode de réalisation selon l'invention, ledit réacteur comprend entre 2 et 35 module(s) catalytique(s).

Dans ce mode de réalisation, la distance minimale « dₘᵢₙ » mesurée en dehors de la zone réactionnelle, définie entre l'arrête interne de la première paroi latérale d'un premier module catalytique et l'arrête interne de la deuxième paroi latérale d'un module catalytique adjacent, formant l'espace vide est d'au moins 30 cm.

Avantageusement, l'épaisseur du lit catalytique dudit module catalytique est inférieure ou égale à 500 mm.

Avantageusement, ledit filet plein se présente sous la forme d'une plaque métallique.

Dans un mode de réalisation selon l'invention, ledit module catalytique comprend en outre :
- au moins un moyen d'entrée du catalyseur situé dans la partie supérieure dudit module catalytique ;
- au moins un moyen de sortie du catalyseur situé dans la partie inférieure dudit module catalytique.

Un autre objet selon l'invention concerne un procédé de reformage catalytique d'une charge hydrocarbonée mettant en œuvre le réacteur catalytique selon l'invention, dans lequel :
- on envoie en continu la charge hydrocarbonée, sous forme gazeuse, dans un lit catalytique contenu dans le réacteur ;
- on met en contact la charge hydrocarbonée traversant radialement le lit catalytique avec le catalyseur de manière à produire un effluent gazeux ;
- on soutire ledit effluent après son passage à travers le conduit de collecte.

De préférence, le ratio entre le débit de la charge hydrocarbonée à traiter et la masse du catalyseur est supérieur ou égal à 20 h⁻¹.

Avantageusement, ledit procédé est réalisé à une température comprise entre 400°C et 600°C, à une pression comprise entre 0,1 MPa et 4 MPa, et avec un rapport molaire hydrogène/hydrocarbures de la charge à traiter compris entre 0,1 et 10.

### Description des figures

Les autres caractéristiques et avantages de l'invention vont apparaître à la lecture de la description qui va suivre, donnée à titre uniquement illustratif et non limitatif, et à laquelle sont annexées :
La figure 1 est une vue en perspective et éclatée d'un réacteur à écoulement radial selon l'art antérieur.
Les figures 2a et 2b représentent chacune respectivement une vue en coupe d'un réacteur à écoulement radial selon l'invention selon un plan perpendiculaire par rapport à l'axe principal du réacteur, dans lequel les modules catalytiques sont de section rectangulaire (figure 2a) ou sont sensiblement structurés et configurés comme un secteur de cylindre (figure 2b).
La figure 3 est une vue en perspective éclatée d'une partie du réacteur à flux radial selon un mode de réalisation de l'invention dans lequel les modules catalytiques sont de section sensiblement structurés et configurés comme un secteur de cylindre (figure 2b).
La figure 4 est une vue en perspective d'un module catalytique du réacteur selon l'invention correspondant au mode de réalisation selon la figure 2b.
La figure 5 est une vue en coupe d'un réacteur selon l'invention selon un plan perpendiculaire par rapport à l'axe principal du réacteur dans lequel le réacteur est à circulation radiale centripète.
La figure 6 est une vue en coupe d'un réacteur selon l'invention selon un plan perpendiculaire par rapport à l'axe principal du réacteur dans lequel le réacteur est à circulation radiale centrifuge.

### Description détaillée de l'invention

### Définition

Au sens de la présente invention, on entend par écoulement radial un écoulement de la charge hydrocarbonée à traiter se faisant à travers un lit catalytique, généralement mobile, selon un ensemble de directions correspondant soit à des rayons orientés depuis la périphérie vers le centre de l'enceinte (circulation radiale centripète) soit à des rayons orientés depuis le centre de l'enceinte vers la périphérie (circulation radiale centrifuge).

### Réacteur

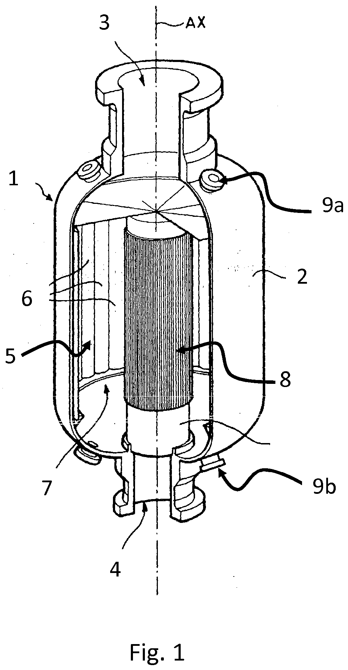

En référence à la figure 1, un réacteur à flux radial **1** selon l'art antérieur se présente extérieurement sous la forme d'une bonbonne formant une enveloppe externe sensiblement cylindrique **2** s'étendant selon un axe de symétrie AX. L'enceinte **2** comprend dans sa partie supérieure un moyen d'introduction **3** de la charge à traiter et dans sa partie inférieure un moyen d'évacuation **4** de l'effluent issu de la réaction catalytique. A l'intérieur de l'enceinte **2** est agencée un lit de catalyseur **7** ayant la forme d'un anneau cylindrique vertical limité du côté intérieur par un tube cylindrique central **8** formé par une grille dite "intérieure" retenant le catalyseur et du côté extérieur, par une autre grille dite "externe" **5** soit du même type que la grille intérieure, soit par un dispositif consistant en un assemblage d'éléments de grille en forme de coquilles **6** s'étendant longitudinalement, comme représenté sur la figure 1. Ces éléments de grille en forme de coquilles **6** formant des conduits sont également connus sous l'appellation anglo-saxonne de "scallops". Ces conduits **6** sont maintenus par le réservoir et plaqués à la face interne de l'enceinte, parallèlement à l'axe AX, pour former une enveloppe interne sensiblement cylindrique. Les éléments de grille en forme de coquilles **6** sont en communication directe avec le moyen d'introduction **3** de la charge à traiter via leur extrémité supérieure, pour recevoir le flux de charge à traiter. Le flux de charge, sous forme gazeuse, diffuse à travers la paroi ajourée des conduits **6,** pour traverser le lit de particules solides de catalyseur **7** en convergeant radialement vers le centre du réacteur **1.** La charge est ainsi mise en contact avec le catalyseur afin de subir des transformations chimiques, par exemple une réaction de reformage catalytique, et produire un effluent de la réaction. L'effluent de la réaction est ensuite collecté par le tube cylindre central **8** (ou conduit de collecte) s'étendant le long de l'axe AX et ayant également une paroi ajourée. Ce cylindre central **8** (ou conduit de collecte) est ici en communication avec le moyen d'évacuation **4** du réacteur via son extrémité inférieure.

En fonctionnement, la charge à traiter introduit dans le moyen d'introduction **3** traverse radialement la grille "externe" **5**, puis traverse radialement le lit de particules de catalyseur **7** où il est mis en contact avec le catalyseur afin de produire un effluent qui est par la suite collecté par le cylindre central **8** et évacué par le moyen d'évacuation **4.**

Un tel réacteur peut également fonctionner avec un écoulement gravitaire continu de catalyseur dans le lit catalytique annulaire **7.** Dans le cas de la figure 1, le réacteur **1** comprend en outre des moyens d'introduction **9a** du catalyseur dans le lit annulaire, disposés dans une partie supérieure du réacteur et des moyens de soutirage **9b** du catalyseur qui sont agencés dans une partie inférieure du réacteur.

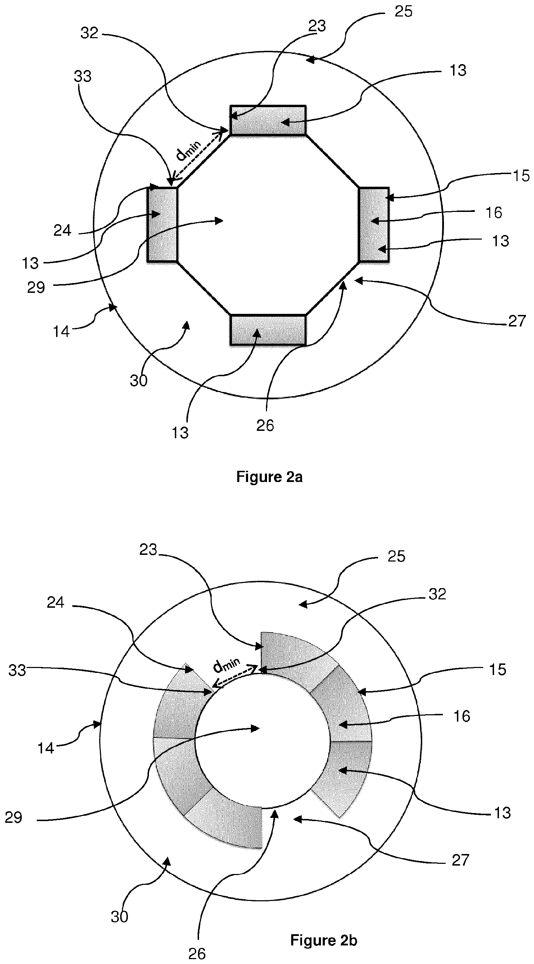

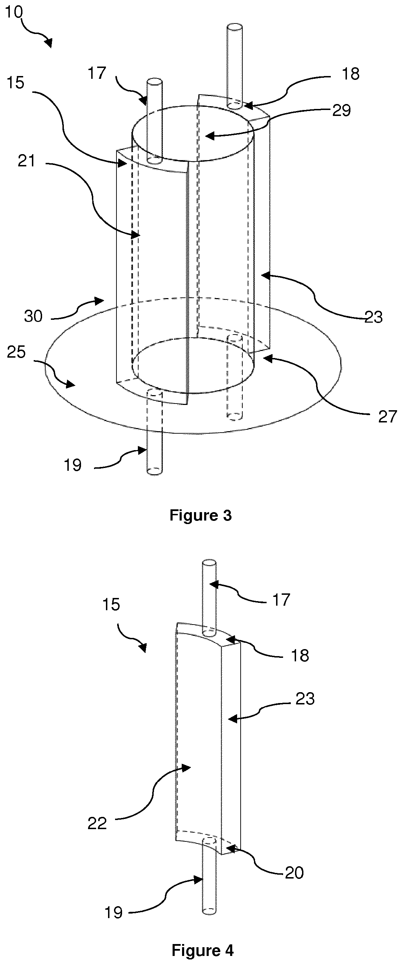

Un réacteur catalytique **10** selon l'invention est représenté aux figures 2 à 6. Dans ce mode de réalisation, le réacteur catalytique **10** à écoulement radial d'une charge hydrocarbonée à traiter comprend au moins :
- un moyen d'introduction de ladite charge à traiter se présentant sous la forme d'une tubulure située en partie supérieure du réacteur ;
- une zone réactionnelle **13** enfermée dans une enveloppe externe **14** sensiblement cylindrique se présentant sous la forme d'au moins un module catalytique **15** s'étendant selon l'axe vertical (AX) dans lequel est enfermé un lit de catalyseur **16** ;
- une zone annulaire **30** située au même niveau que ledit module catalytique, en dehors de la zone réactionnelle **13 ;**
- un moyen de support **25** dudit module catalytique **15** ;
- un moyen de collecte **29** s'étendant le long de l'axe vertical (AX) pour collecter l'effluent issu de la réaction catalytique ;
- un moyen d'évacuation de l'effluent issu de la réaction catalytique, ledit moyen se présentant sous la forme d'une tubulure située en partie inférieure du réacteur ;
- au moins un espace vide **27,** situé en dehors de la zone réactionnelle **13,** et débouchant sur ladite zone annulaire **30,** ledit espace vide **27** comprenant au moins un filet plein **26** s'étendant selon l'axe vertical (AX) et positionné de façon adjacente au moyen de collecte **29.**

Dans un mode de réalisation selon l'invention, ledit module catalytique **15** est de section rectangulaire (cf. figure 2a). Dans un autre mode de réalisation selon l'invention, ledit module catalytique **15** est sensiblement structuré et configuré comme un secteur de cylindre (cf. figure 2b). Que ce soit l'un ou l'autre des modes de réalisation, le module catalytique **15** est délimité par :
- une paroi externe **21** et une paroi interne **22,** lesdites parois **21** et **22** étant perméables respectivement à la charge à traiter et à l'effluent issu de la réaction catalytique ;
- deux parois latérales **23** et **24** étanches à la charge à traiter ;
- une partie supérieure **18** et une partie inférieure **20** étanches à la charge à traiter.

Les parois externes **21** et internes **22** du module catalytique **15** sont de préférence constituées de grilles de type Johnson.

Un tel agencement du réacteur catalytique permet de réduire de manière significative l'épaisseur « e » du lit de catalyseur **16** compris dans ledit module catalytique **15.** Plus particulièrement, l'épaisseur « e » du lit de catalyseur **16** est inférieure ou égale à 500 mm, de préférence inférieure ou égale à 400 mm, plus préférentiellement inférieure ou égale à 300 mm et encore plus préférentiellement inférieure ou égale à 200 mm. La faible épaisseur du lit de catalyseur compris dans ledit module catalytique **15** permet ainsi de mieux contrôler les pertes de charge et donc permet d'augmenter le P.P.H. à une valeur supérieure ou égale à 20 h⁻¹, de préférence supérieure ou égale à 50 h⁻¹, plus préférentiellement supérieure ou égale à 100 h⁻¹, est encore plus préférentiellement supérieure ou égale à 200 h⁻¹.

Cependant, la présence d'un réacteur comprenant une zone réactionnelle avec un lit catalytique de faible épaisseur ne permet pas de réaliser des opérations de maintenance et d'inspection à l'intérieur des modules catalytiques **15.** Ainsi, la présence d'au moins un espace vide **27** au même niveau que la zone réactionnelle **13** permet de faciliter l'inspection et/ou la maintenance du moyen de collecte et des modules catalytiques **15.**

Lorsque le réacteur selon l'invention comprend un seul module catalytique (mode de réalisation non représenté sur les figures) ledit réacteur comprend un espace vide **27** situé en dehors de la zone réactionnelle **13,** entre la première paroi latérale **23** et la deuxième paroi latérale **24** dudit module catalytique **15,** et débouchant sur ladite zone annulaire **30.** Dans ce mode de réalisation, la distance minimale « dₘᵢₙ » définie entre l'arrête interne **32** de la première paroi latérale **23** du module catalytique **15** et l'arrête interne **33** de la deuxième paroi latérale **24** du module catalytique **15,** formant l'espace vide **27,** est d'au moins 30 cm, de préférence d'au moins 50 cm.

L'espace vide **27** comprend en outre au moins un filet plein **26** s'étendant selon l'axe vertical (AX) positionné de façon adjacente au conduit de collecte **29.** Dans le contexte de l'invention, ledit filet plein **26** est un élément qui est imperméable à la charge hydrocarbonée à traiter, se présentant sous la forme d'un fluide gazeux. Par exemple, le filet plein **26** se présente sous la forme d'une plaque métallique fixée sur la partie externe du conduit de collecte **29,** de sorte que ledit filet plein **26** empêche le passage de la charge hydrocarbonée dans le conduit de collecte **29.** Dans le cadre de l'invention, la hauteur dudit filet plein **26** est sensiblement égale à la hauteur dudit module catalytique **15.** Le filet plein **26** peut être également amovible de manière à pouvoir faciliter les opérations de maintenance dans le réacteur.

Dans un mode de réalisation particulier selon l'invention, la paroi latérale **23** du module catalytique **15,** le filet plein **26,** et la paroi latérale **24** du module catalytique **15** forment une seule pièce afin d'améliorer l'étanchéité de la zone réactionnelle **13.**

Dans un mode de réalisation particulier selon l'invention, tel qu'illustré aux figures 2a et 2b, la zone réactionnelle **13** du réacteur catalytique **10** comprend une pluralité de modules catalytiques **15,** structurellement indépendants les uns des autres. La zone réactionnelle **13** peut comprendre entre 1 et 35 module(s) catalytique(s) **15,** de préférence entre 2 et 20 modules catalytiques. La présence de plusieurs modules catalytiques **15** permet également d'envisager d'en condamner un en cas de défaillance, tout en continuant à faire fonctionner le système sur les autres modules catalytiques. De préférence, chaque module catalytique est de structure et de forme identique (soit de section rectangulaire soit structuré et configuré comme un secteur de cylindre).

Lorsque le dispositif selon l'invention comprend une pluralité de modules catalytiques **15,** ledit réacteur comprend au moins un espace vide **27** situé en dehors de la zone réactionnelle **13,** entre la première paroi latérale **23** d'un premier module catalytique **15** et la deuxième paroi latérale **24** d'un deuxième module catalytique **15** adjacent au premier module catalytique **15,** et débouchant sur ladite zone annulaire **30.** Dans ce mode de réalisation, la distance minimale « dₘᵢₙ » définie entre l'arrête interne **32** de la première paroi latérale **23** d'un premier module catalytique **15** et l'arrête interne **33** de la deuxième paroi latérale **24** d'un deuxième module catalytique **15** adjacent au premier module catalytique (telle qu'illustrée en figure 2a ou 2b), formant l'espace vide **27,** est d'au moins 30 cm, de préférence d'au moins 50 cm.

De la même manière que les modes de réalisations précédents, l'espace vide **27** comprend au moins un filet plein **26** s'étendant selon l'axe vertical (AX) positionné de façon adjacente au conduit de collecte **29.** Les caractéristiques techniques du filet plein **26** sont identiques à celle du filet plein tel que décrit ci-avant.

Il est à noter que le catalyseur peut être un réacteur à lit catalytique fixe ou un réacteur à lit catalytique mobile, c'est-à-dire que le catalyseur est introduit dans le réacteur et soutiré dudit réacteur en continu. Dans le mode de réalisation particulier dans lequel le réacteur est à lit catalytique mobile, le catalyseur peut être introduit dans le module catalytique **15** via une tubulure d'entrée **17** située dans la partie supérieure **18** du module catalytique. Il peut être évacué du module catalytique **15** via une tubulure de sortie **19** située dans la partie inférieure du module catalytique.

Ainsi le réacteur catalytique selon l'invention permet d'atteindre des objectifs de P.P.H. élevées pour optimiser les performances réactionnelles du procédé, tout en proposant un concept mécanique réaliste, modulable, de maintenance aisée, et comprenant de faibles quantités de catalyseur.

### Procédé

Le réacteur selon l'invention peut être utilisé dans des réactions à circulation radiale de fluide gazeux comme par exemple une réaction de reformage catalytique d'une charge hydrocarbonée, une isomérisation squelettale des oléfines, la métathèse pour la production de propylène, une réaction d'oligocraquage.

Plus particulièrement, l'invention concerne également un procédé de reformage catalytique d'une charge hydrocarbonée utilisant le réacteur selon l'invention. Le réacteur selon l'invention peut en effet être mis en œuvre dans des procédés de reformage des essences et de production de composés aromatiques. Les procédés de reformage permettent d'augmenter l'indice d'octane des fractions essences provenant de la distillation du pétrole brut et/ou d'autres procédés de raffinage telles que par exemple le craquage catalytique ou le craquage thermique. Les procédés de production d'aromatiques fournissent les produits de base (benzène, toluène, xylènes) utilisables en pétrochimie. Ces procédés revêtent un intérêt supplémentaire en contribuant à la production de quantités importantes d'hydrogène indispensable pour les procédés d'hydrogénation et d'hydrotraitement de la raffinerie.

La charge à traiter contient généralement des hydrocarbures paraffiniques, naphténiques et aromatiques contenant de 5 à 12 atomes de carbone par molécule. Cette charge est définie, entre autres, par sa densité et sa composition pondérale. Ces charges peuvent avoir un point initial d'ébullition compris entre 40°C et 70°C et un point final d'ébullition compris entre 160°C et 220°C. Elles peuvent également être constituées par une fraction ou un mélange de fractions essences ayant des points d'ébullition initiaux et finaux compris entre 40°C et 220°C.

La charge à traiter peut ainsi également être constituée par un naphta lourd ayant de point d'ébullition compris entre 160°C à 200°C.

Typiquement, la charge est introduite dans le réacteur en présence d'hydrogène et avec un rapport molaire hydrogène/hydrocarbures de la charge généralement compris entre 0,1 et 10, de préférence entre 1 et 8. Les conditions opératoires du reformage sont généralement les suivantes: une température de préférence comprise entre 400°C et 600°C, de manière plus préférée entre 450°C et 540°C, et une pression de préférence comprise entre 0,1 MPa et 4 MPa et de manière plus préférée entre 0,25 MPa et 3,0 MPa. Tout où partie de l'hydrogène produit peut être recyclé à l'entrée du réacteur de reformage. Le ratio entre le débit de la charge hydrocarbonée à traiter et la masse du catalyseur est supérieur ou égal à 20 h⁻¹, de préférence supérieure ou égal à 50 h⁻¹, plus préférentiellement supérieur ou égal à 100 h⁻¹, et encore plus préférentiellement supérieur ou égal à 200 h⁻¹.

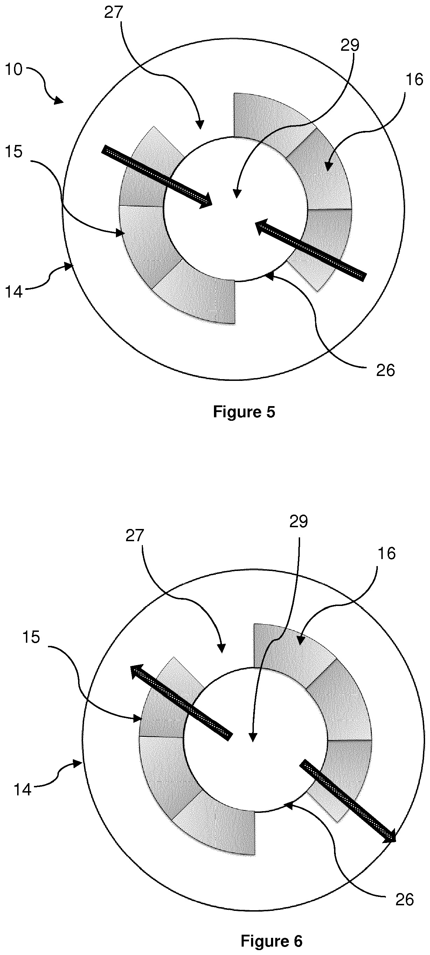

Un premier mode de mise en œuvre du réacteur est représenté en figure 5, le réacteur étant à circulation radiale centripète (i.e. le flux gazeux circule depuis la périphérie de l'enceinte vers le centre de l'enceinte). En fonctionnement, la charge hydrocarbonée, sous forme gazeuse, est injectée soit par le fond soit par le sommet du réacteur dans la zone annulaire **30** puis passe à travers la paroi externe **21** dudit au moins un module catalytique **15** et traverse ensuite de manière sensiblement radiale le lit de particules de catalyseur située dans ledit module catalytique **15.** Dans le module catalytique **15** le fluide gazeux est mis en contact avec le catalyseur pour produire un effluent réactionnel, généralement gazeux, qui est collecté dans l'espace du conduit de collecte **29** qui est ensuite soutiré soit au sommet du réacteur (lorsque la charge est introduite en fond du réacteur) soit en fond du réacteur (lorsque la charge est introduite par le sommet du réacteur).

Un autre mode de réalisation du réacteur selon l'invention (représenté en figure 6) est un réacteur à circulation radiale centrifuge (i.e. le flux gazeux circule depuis le centre de l'enceinte vers la périphérie de l'enceinte). En fonctionnement, la charge hydrocarbonée, sous forme gazeuse, est introduite soit par le sommet soit par le fond du réacteur via la paroi interne **22** du module catalytique **15.** La charge diffuse à travers la paroi interne **22** et traverse de manière sensiblement radiale le lit de catalyseur compris dans le module catalytique **15.** Un effluent réactionnel est collecté dans la zone annulaire **30** faisant office de conduit de collecte puis est soutiré soit au sommet du réacteur (lorsque la charge est introduite en fond du réacteur) soit en fond du réacteur (lorsque la charge est introduite au sommet du réacteur).

## Revendications

1. Réacteur catalytique (10) à écoulement radial d'une charge hydrocarbonée, lequel réacteur comprenant :
- au moins un moyen d'introduction de ladite charge à traiter ;
- au moins un moyen d'évacuation de l'effluent issu de la réaction catalytique ;
- une zone réactionnelle (13) enfermée dans une enveloppe externe sensiblement cylindrique (14) se présentant sous la forme d'au moins un module catalytique (15) s'étendant selon l'axe vertical (AX), ledit module catalytique (15) comprenant :
∘ au moins un lit de catalyseur (16) ;
∘ au moins une paroi externe (21) et une paroi interne (22), perméables respectivement à la charge à traiter et à l'effluent issu de la réaction catalytique ;
∘ au moins une première paroi latérale (23) et une deuxième paroi latérale (24) étanches à la charge à traiter ;
- au moins un moyen de support (25) dudit module catalytique (15) ;
- au moins un moyen de collecte (29) de l'effluent issu de la réaction catalytique s'étendant le long de l'axe (AX) en communication avec ladite paroi externe (21) ou ladite paroi interne (22) dudit module catalytique (15) ;
- une zone annulaire (30) située au même niveau que ledit module catalytique (15), en dehors de la zone réactionnelle (13),
ledit réacteur catalytique étant **caractérisé en ce que** :
- lorsque ledit réacteur catalytique comprend un seul module catalytique (15), ledit réacteur comprend un espace vide (27) situé en dehors de la zone réactionnelle (13), entre la première paroi latérale (23) et la deuxième paroi latérale (24) dudit module catalytique (15), et débouchant sur ladite zone annulaire (30),
- lorsque ledit réacteur catalytique comprend une pluralité de modules catalytiques (15), ledit réacteur comprend au moins un espace vide (27) situé en dehors de la zone réactionnelle (13), entre la première paroi latérale (23) d'un premier module catalytique (15) et la deuxième paroi latérale (24) d'un deuxième module catalytique (15) adjacent au premier module catalytique (15), et débouchant sur ladite zone annulaire (30),
ledit espace vide (27) comprenant au moins un filet plein (26) s'étendant selon l'axe vertical (AX) et positionné de façon adjacente au moyen de collecte (29).

2. Réacteur catalytique selon la revendication 1, **caractérisé en ce que** ledit module catalytique (15) est sensiblement structuré et configuré comme un secteur de cylindre.

3. Réacteur selon la revendication 1, **caractérisé en ce que** ledit module catalytique (15) est de section rectangulaire.

4. Réacteur catalytique selon l'une quelconque des revendications précédentes, **caractérisé en ce que** lesdites parois externes (21) et internes (22) dudit module catalytique (15) sont constituées de grilles de type Johnson.

5. Réacteur catalytique selon l'une quelconque des revendications précédentes, **caractérisé en ce qu'**il comprend une pluralité de modules catalytiques (15) structurellement indépendants les uns des autres.

6. Réacteur selon l'une quelconque des revendications précédentes, **caractérisé en ce qu'**il comprend un seul module catalytique (15).

7. Réacteur selon la revendication 6, **caractérisé en ce que** la distance minimale « dₘᵢₙ », mesurée en dehors de la zone réactionnelle (13), définie entre l'arrête interne (32) de la première paroi latérale (23) du module catalytique (15) et l'arrête interne (33) de la deuxième paroi latérale (24) du module catalytique (15), formant l'espace vide (27) est d'au moins 30 cm.

8. Réacteur catalytique selon l'une quelconque des revendications 1 à 5, **caractérisé en ce qu'**il comprend entre 2 et 35 module(s) catalytique(s) (15).

9. Réacteur selon la revendication 8, **caractérisé en ce qu'**il comprend une distance minimale « dₘᵢₙ » mesurée en dehors de la zone réactionnelle (13), définie entre l'arrête interne (32) de la première paroi latérale (23) d'un premier module catalytique (15) et l'arrête interne (33) de la deuxième paroi latérale (24) d'un module catalytique (15) adjacent, formant l'espace vide (27), est d'au moins 30 cm.

10. Réacteur catalytique selon l'une quelconque des revendications 1 à 9, **caractérisé en ce que** l'épaisseur du lit catalytique (16) dudit module catalytique (15) est inférieure ou égale à 500 mm.

11. Réacteur catalytique selon l'une quelconque des revendications 1 à 10, **caractérisé en ce que** ledit filet plein (26) se présente sous la forme d'une plaque métallique.

12. Réacteur selon l'une quelconque des revendications 1 à 11, **caractérisé en ce que** ledit module catalytique (15) comprend en outre :
- au moins un moyen d'entrée du catalyseur (17) situé dans la partie supérieure (18) dudit module catalytique ;
- au moins un moyen de sortie du catalyseur (19) situé dans la partie inférieure (20) dudit module catalytique.

13. Procédé de reformage catalytique d'une charge hydrocarbonée mettant en œuvre le réacteur catalytique selon l'une quelconque des revendications 1 à 12, dans lequel :
- on envoie en continu la charge hydrocarbonée, sous forme gazeuse, dans un lit catalytique contenu dans le réacteur ;
- on met en contact la charge hydrocarbonée traversant radialement le lit catalytique avec le catalyseur de manière à produire un effluent gazeux ;
- on soutire ledit effluent après son passage à travers le conduit de collecte.

14. Procédé selon la revendication 13, **caractérisé en ce que** le ratio entre le débit de la charge hydrocarbonée à traiter et la masse du catalyseur est supérieur ou égal à 20 h⁻¹.

15. Procédé selon les revendications 13 ou 14, **caractérisé en ce que** ledit procédé est réalisé à une température comprise entre 400°C et 600°C, à une pression comprise entre 0,1 MPa et 4 MPa, et avec un rapport molaire hydrogène/hydrocarbures de la charge à traiter compris entre 0,1 et 10.

## Patentansprüche

1. Katalytischer Reaktor (10) mit radialer Strömung eines Kohlenwasserstoffeinsatzes, der Reaktor umfassend:
- mindestens ein Mittel zur Einbringung des zu behandelnden Einsatzes;
- mindestens ein Mittel zur Abführung der Ausströmung; die aus der katalytischen Reaktion hervorgeht;
- einen Reaktionsbereich (13), der in einer Außenhülle (14) eingeschlossen ist, die im Wesentlichen zylinderförmig ist, der in Form mindestens eines katalytischen Moduls (15) vorliegt, das sich entlang der Vertikalachse (AX) erstreckt, das katalytische Modul (15) umfassend:
o mindestens ein Katalysatorbett (16);
o mindestens eine Außenwand (21) und eine Innenwand (22), die jeweils für den zu behandelnden Einsatz und die Ausströmung, die aus der katalytischen Reaktion hervorgeht, durchlässig sind;
o mindestens eine erste Seitenwand (23) und eine zweite Seitenwand (24), die für den zu behandelnden Einsatz undurchlässig sind;
- mindestens ein Mittel zum Halten (25) des katalytischen Moduls (15);
- mindestens ein Mittel zum Sammeln (29) der Ausströmung, die aus der katalytischen Reaktion hervorgeht, das sich entlang der Achse (AX) in Verbindung mit der Außenwand (21) oder der Innenwand (22) des katalytischen Moduls (15) erstreckt;
- einen ringförmigen Bereich (30), der sich auf derselben Ebene wie das katalytische Modul (15) außerhalb des Reaktionsbereichs (13) befindet,
wobei der katalytische Reaktor **dadurch gekennzeichnet ist, dass**:
- wenn der katalytische Reaktor ein einzelnes katalytisches Modul (15) umfasst, der Reaktor einen leeren Raum (27) umfasst, der sich außerhalb des Reaktionsbereichs (13) zwischen der ersten Seitenwand (23) und der zweiten Seitenwand (24) des katalytischen Moduls (15) befindet und in den ringförmigen Bereich (30) mündet,
- wenn der katalytische Reaktor eine Mehrzahl von katalytischen Modulen (15) umfasst, der Reaktor mindestens einen leeren Raum (27) umfasst, der sich außerhalb des Reaktionsbereichs (13) zwischen der ersten Seitenwand (23) eines ersten katalytischen Moduls (15) und der zweiten Seitenwand (24) eines zweiten katalytischen Moduls (15), das an das erste katalytische Modul (15) angrenzt, befindet und in den ringförmigen Bereich (30) mündet,
der leere Raum (27) umfassend mindestens ein Vollnetz (26), das sich entlang der vertikalen Achse (AX) erstreckt und angrenzend an das Sammelmittel (29) positioniert ist.

2. Katalytischer Reaktor nach Anspruch 1, **dadurch gekennzeichnet, dass** das katalytische Modul (15) im Wesentlichen wie ein Zylinderabschnitt strukturiert und ausgebildet ist.

3. Reaktor nach Anspruch 1, **dadurch gekennzeichnet, dass** das katalytische Modul (15) einen rechteckigen Querschnitt aufweist.

4. Katalytischer Reaktor nach einem der vorhergehenden Ansprüche, **dadurch gekennzeichnet, dass** die Außen- (21) und Innenwände (22) des katalytischen Moduls (15) von Johnson-Gittern gebildet sind.

5. Katalytischer Reaktor nach einem der vorhergehenden Ansprüche, **dadurch gekennzeichnet, dass** er eine Mehrzahl von katalytischen Modulen (15) umfasst, die strukturell voneinander unabhängig sind.

6. Reaktor nach einem der vorhergehenden Ansprüche, **dadurch gekennzeichnet, dass** er ein einzelnes katalytisches Modul (15) umfasst.

7. Reaktor nach Anspruch 6, **dadurch gekennzeichnet, dass** der Mindestabstand "dmin", der außerhalb des Reaktionsbereichs (13) gemessen wird, der zwischen der Innenkante (32) der ersten Seitenwand (23) des katalytischen Moduls (15) und der Innenkante (33) der zweiten Seitenwand (24) des katalytischen Moduls (15) definiert ist, die den leeren Raum (27) bilden, mindestens 30 cm beträgt.

8. Katalytischer Reaktor nach einem der Ansprüche 1 bis 5, **dadurch gekennzeichnet, dass** er zwischen 2 und 35 katalytisch(en) Modul(en) (15) umfasst.

9. Reaktor nach Anspruch 8, **dadurch gekennzeichnet, dass** er einen Mindestabstand "dₘᵢₙ" umfasst, der außerhalb des Reaktionsbereichs (13) gemessen wird, der zwischen der Innenkante (32) der ersten Seitenwand (23) eines ersten katalytischen Moduls (15) und der Innenkante (33) der zweiten Seitenwand (24) eines angrenzenden katalytischen Moduls (15) definiert ist, die den leeren Raum (27) bilden, mindestens 30 cm beträgt.

10. Katalytischer Reaktor nach einem der Ansprüche 1 bis 9, **dadurch gekennzeichnet, dass** die Dicke des Katalysatorbetts (16) des katalytischen Moduls (15) kleiner als oder gleich 500 mm ist.

11. Katalytischer Reaktor nach einem der Ansprüche 1 bis 10, **dadurch gekennzeichnet, dass** das Vollnetz (26) in Form einer Metallplatte vorliegt.

12. Reaktor nach einem der Ansprüche 1 bis 11, **dadurch gekennzeichnet, dass** das katalytische Modul (15) ferner Folgendes umfasst:
- mindestens ein Mittel zur Einbringung des Katalysators (17), das sich im oberen Abschnitt (18) des katalytischen Moduls befindet;
- mindestens ein Mittel zur Ausbringung des Katalysators (19), das sich im unteren Abschnitt (20) des katalytischen Moduls befindet.

13. Verfahren zur katalytischen Reformierung eines Kohlenwasserstoffeinsatzes, wobei der katalytische Reaktor nach einem der Ansprüche 1 bis 12 verwendet wird, wobei:
- der Kohlenwasserstoffeinsatz kontinuierlich in Gasform in ein Katalysatorbett gegeben wird, das im Reaktor enthalten ist;
- der Kohlenwasserstoffeinsatz, der das Katalysatorbett radial durchströmt, mit dem Katalysator in Kontakt gebracht wird, so dass eine gasförmige Ausströmung erzeugt wird;
- die Ausströmung nach ihrem Durchtritt durch die Sammelleitung abgezogen wird.

14. Verfahren nach Anspruch 13, **dadurch gekennzeichnet, dass** das Verhältnis zwischen dem Durchsatz des zu behandelnden Kohlenwasserstoffeinsatzes und der Masse des Katalysators größer oder gleich 20 h⁻¹ ist.

15. Verfahren nach den Ansprüchen 13 oder 14, **dadurch gekennzeichnet, dass** das Verfahren bei einer Temperatur zwischen 400 °C und 600 °C bei einem Druck zwischen 0,1 MPa und 4 MPa und mit einem Wasserstoff/Kohlenwasserstoffe-Molverhältnis des zu behandelnden Einsatzes zwischen 0,1 und 10 durchgeführt wird.

## Claims

1. Catalytic reactor (10) with radial flow of a hydrocarbon feedstock, said reactor comprising:
- at least one means for introducing said feedstock to be treated;
- at least one means for discharging the effluent resulting from the catalytic reaction;
- a reaction zone (13) enclosed in a substantially cylindrical outer shell (14) that is in the form of at least one catalytic module (15) extending along the vertical axis (AX), said catalytic module (15) comprising:
∘ at least one catalyst bed (16);
∘ at least one outer wall (21) and one inner wall (22) permeable respectively to the feedstock to be treated and to the effluent resulting from the catalytic reaction;
∘ at least one first side wall (23) and one second side wall (24) impermeable to the feedstock to be treated;
- at least one means (25) for supporting said catalytic module (15);
- at least one means (29) for collecting the effluent resulting from the catalytic reaction extending along the axis (AX) in communication with said outer wall (21) or said inner wall (22) of said catalytic module (15) ;
- an annular zone (30) located at the same level as said catalytic module (15), outside of the reaction zone (13),
said catalytic reactor being **characterized in that**:
- when said catalytic reactor comprises a single catalytic module (15), said reactor comprises an empty space (27) located outside of the reaction zone (13), between the first side wall (23) and the second side wall (24) of said catalytic module (15), and opening onto said annular zone (30),
- when said catalytic reactor comprises a plurality of catalytic modules (15), said reactor comprises at least one empty space (27) located outside of the reaction zone (13), between the first side wall (23) of a first catalytic module (15) and the second side wall (24) of a second catalytic module (15) adjacent to the first catalytic module (15), and opening onto said annular zone (30),
said empty space (27) comprising at least one solid net (26) extending along the vertical axis (AX) and positioned adjacent to the collecting means (29).

2. Catalytic reactor according to Claim 1, **characterized in that** said catalytic module (15) is substantially structured and configured as a sector of a cylinder.

3. Reactor according to Claim 1, **characterized in that** said catalytic module (15) is of rectangular cross section.

4. Catalytic reactor according to any one of the preceding claims, **characterized in that** said outer (21) and inner (22) walls of said catalytic module (15) consist of Johnson-type screens.

5. Catalytic reactor according to any one of the preceding claims, **characterized in that** it comprises a plurality of catalytic modules (15) that are structurally independent of one another.

6. Reactor according to any one of the preceding claims, **characterized in that** it comprises a single catalytic module (15).

7. Reactor according to Claim 6, **characterized in that** the minimum distance "dmin", measured outside of the reaction zone (13), defined between the inner stop (32) of the first side wall (23) of the catalytic module (15) and the inner stop (33) of the second side wall (24) of the catalytic module (15), forming the empty space (27), is at least 30 cm.

8. Catalytic reactor according to any one of Claims 1 to 5, **characterized in that** it comprises between 2 and 35 catalytic modules (15).

9. Reactor according to Claim 8, **characterized in that** it comprises a minimum distance "dmin", measured outside of the reaction zone (13), defined between the inner stop (32) of the first side wall (23) of a first catalytic module (15) and the inner stop (33) of the second side wall (24) of an adjacent catalytic module (15), forming the empty space (27), is of at least 30 cm.

10. Catalytic reactor according to any one of Claims 1 to 9, **characterized in that** the thickness of the catalyst bed (16) of said catalytic module (15) is less than or equal to 500 mm.

11. Catalytic reactor according to any one of Claims 1 to 10, **characterized in that** said solid net (26) is in the form of a metal plate.

12. Reactor according to any one of Claims 1 to 11, **characterized in that** said catalytic module (15) further comprises:
- at least one catalyst inlet means (17) located in the upper part (18) of said catalytic module;
- at least one catalyst outlet means (19) located in the lower part (20) of said catalytic module.

13. Process for the catalytic reforming of a hydrocarbon feedstock using the catalytic reactor according to any one of Claims 1 to 12, wherein:
- the hydrocarbon feedstock, in gaseous form, is continuously sent into a catalyst bed contained in the reactor;
- the hydrocarbon feedstock passing radially through the catalyst bed is brought into contact with the catalyst so as to produce a gaseous effluent;
- said effluent is drawn off after passing through the collection duct.

14. Process according to Claim 13, **characterized in that** the ratio of the flow rate of the hydrocarbon feedstock to be treated to the mass of the catalyst is greater than or equal to 20 h⁻¹.

15. Process according to Claim 13 or 14, **characterized in that** said process is carried out at a temperature of between 400°C and 600°C, at a pressure of between 0.1 MPa and 4 MPa, and with a hydrogen/hydrocarbons of the feedstock to be treated molar ratio of between 0.1 and 10.
